# EUROPEAN PATENT APPLICATION

(11) **EP 1 455 355 A2**
(43) Date of publication of application: **08.09.2004**
(21) Application number: 04251167.5
(22) Date of filing: 01.03.2004
(51) Int. Cl.: G11B 19/02

(54) **Information processing apparatus and information processing method**

(30) Priority: 03.03.2003 JP 2003056039
(71) Applicant: SONY CORPORATION, Tokyo 141 (JP)
(72) Inventor: Nishikawa, Naohiro, c/o Intellectual Property, Shinagawa-ku Tokyo 141 (JP)
(74) Representative: Turner, James Arthur

(57) **Abstract**

A magneto-optical disc 1, for example, that is storage media in which information is stored, is rotated by a spindle motor 2. Reflected light from the magneto-optical disc 1 is detected by an optical head 3 and a detected signal is supplied to a servo circuit 4, which then makes servo operations. Further, upon reproducing operation, information is read out from the detected signal detected from the magneto-optical disc 1. Of the thus read out information, a reproduced RF (radio frequency) signal is processed in a decoding fashion such as modulation by a decoder 6 and written in a buffer memory area of a nonvolatile memory 8 composed of a suitable memory such as an MRAM (magnetic random-access memory). Furthermore, written data is transferred to a codec (coder and decoder) decoder 10 under control of a memory controller 9, in which transferred data is expanded and processed in a reproduced signal processing fashion, thereby resulting in an output digital signal being formed. The thus formed output digital signal is transferred to a D/A (digital-to-analog) converter and thereby reproduced. Thus, the information reproducing apparatus can resume reproducing information more quickly without increasing power consumption.

## Description

This invention relates to information processing apparatus and methods.

In a reproducing apparatus for reproducing a DVD (Digital Versatile Disc), for example, in order to resume reproduction of a recording medium rapidly, disc type identifying information is registered on a nonvolatile memory such as an EEPROM (Electrically Erasable and Programmable ROM (read-only memory)). When the reproducing apparatus is powered on, the disc should not be read out but registered disc type identifying information is read out from the nonvolatile memory. Further, when the disc is ejected from the reproducing apparatus, the disc type identifying information is erased from the nonvolatile memory (see e.g. Cited Patent Reference 1).

However, according to the technology disclosed in the cited patent reference 1, for example, when information is reproduced, the disc should be rotated in the end so that the disc should start rotating rapidly. When the disc starts rotating rapidly as described above, electric power of an amount larger than electric power usually required when the disc is in use should be consumed, and hence power consumption increases unavoidably.

On the other hand, a magnetic random-access memory (hereinafter abbreviated as an "MRAM") has been developed so far. This MRAM uses a TMR (tunnel magnetoresistive effect) element to achieve access speed as high as that of a DRAM (dynamic random-access memory) and it has properties of a nonvolatile memory (see e.g. Cited Non-patent Reference 1). As such nonvolatile memory, there have been developed other types of nonvolatile memories such as an FeRAM (Ferroelectric RAM), a RRAM (Resistance RAM), OUM (Ovonic Unified Memory) and a PMC (Programmable Metallization Cell).

### [Cited Patent Reference 1]

Official Gazette of Japanese laid-open patent application No. 2001-256716

### [Cited Non-patent Reference 1]

"Conviction to 256M MRAM, Special Number of Cover Story", written by OHISHI MOTOYUKI and published by NIKKEI BUSINESS PUBLICATIONS INC., NIKEEI ELECTRONICS 2003, January 20, pp. 83 to 105.

In the disc reproducing apparatus using CD, MD, DVD, HDD, since it takes plenty of time to initialize a time during which rotation of disc is stabilized or a time required by an optical head to move, the reproducing apparatus is unable to resume reproduction of the recording medium at high speed after it has been powered off. Further, it has also been reported that large power consumption, in particular, occurs when the disc starts rotating rapidly.

On the other hand, as the related-art technology by which the disc reproducing apparatus becomes able to resume reproduction of the recording medium quickly, there is known a method for continuing rotation of disc even when the disc reproducing apparatus is powered off. However, according to this previously-proposed method, since supply of power to the disc reproducing apparatus should be continued even when the disc reproducing apparatus is powered off, electric power consumed by the apparatus cannot be decreased.

various respective aspects and features of the invention are defined in the appended claims. Features from the dependent claims may be combined with features of the independent claims as appropriate and not merely as explicitly set out in the claims.

In view of the aforesaid aspects, embodiments of the present invention can provide an information processing apparatus and an information processing method in which electric power consumed by a reproducing apparatus can decrease even when the reproducing apparatus resumes reproduction of a recording medium quickly.

According to embodiments of the present invention, information of a predetermined amount is stored in a buffer memory of a nonvolatile memory from the position set at which an information processing apparatus gets into the stop mode and the information processing apparatus is powered off. Then, when the information processing apparatus resumes information processing next time, the information processing apparatus starts processing latest information stored in the buffer memory after the information processing apparatus has been powered on. According to this arrangement, the information processing apparatus can resume processing information quickly or the information reproducing apparatus can resume reproduction of the recording medium quickly without increasing power consumption.

According to an aspect of the present invention, there is provided an information processing apparatus using a disc-shaped recording medium. This information processing apparatus includes a buffer memory between a means for reading out information from the recording medium and an information processing means, the buffer memory being composed of a nonvolatile memory. During the information processing apparatus is active, the buffer memory stores part of or whole of information read out from the recording medium. When the information processing apparatus gets into the stop mode, supply of electric power to the buffer memory is stopped while the buffer memory retains a predetermined amount of information to be processed next time. When the information processing apparatus resumes processing information, it starts processing a predetermined amount of information to be processed next time stored in the buffer memory.

According to a further aspect of the present invention, there is provided an information processing method using a disc-shaped recording medium. An information processing apparatus includes a buffer memory between a means for reading out information from the recording medium and an information processing means, the buffer memory being composed of a nonvolatile memory. During the information processing apparatus is active, the buffer memory stores part of or whole of information read out from the recording medium. When the information processing apparatus gets into the stop mode, supply of electric power to the buffer memory is stopped while the buffer memory retains a predetermined amount of information to be processed next time. When the information processing apparatus resumes processing information, it starts processing the predetermined amount of information to be processed next time stored in the buffer memory.

Embodiments of the present invention relate to an information apparatus and an information processing method suitable for use with a reproducing apparatus using a CD (Compact disc), an MD (Mini Disc), a DVD (Digital Versatile Disc) and the like or a HDD (Hard Disc Drive) apparatus and so on. More particularly, embodiments of the invention relates to an information processing apparatus and an information processing method capable of resuming reproduction of a recording medium rapidly and which can decrease power consumption.

The invention will now be described by way of example with reference to the accompanying drawings, throughout which like parts are referred to by like references, and in which:
FIG. 1 is a block diagram showing an arrangement of an information reproducing apparatus according to an embodiment of the present invention;
FIG. 2 is a diagram showing an arrangement of a data area that is written in a nonvolatile memory;
FIG. 3 is a flowchart to which reference will be made in explaining the manner in which a user stops an information reproducing apparatus during the information reproducing apparatus is active to reproduce information;
FIG. 4 is a flowchart to which reference will be made in explaining the processing executed when a disc is ejected from the information reproducing apparatus; and
FIG. 5 is a flowchart to which reference will be made in explaining the reproduction processing.

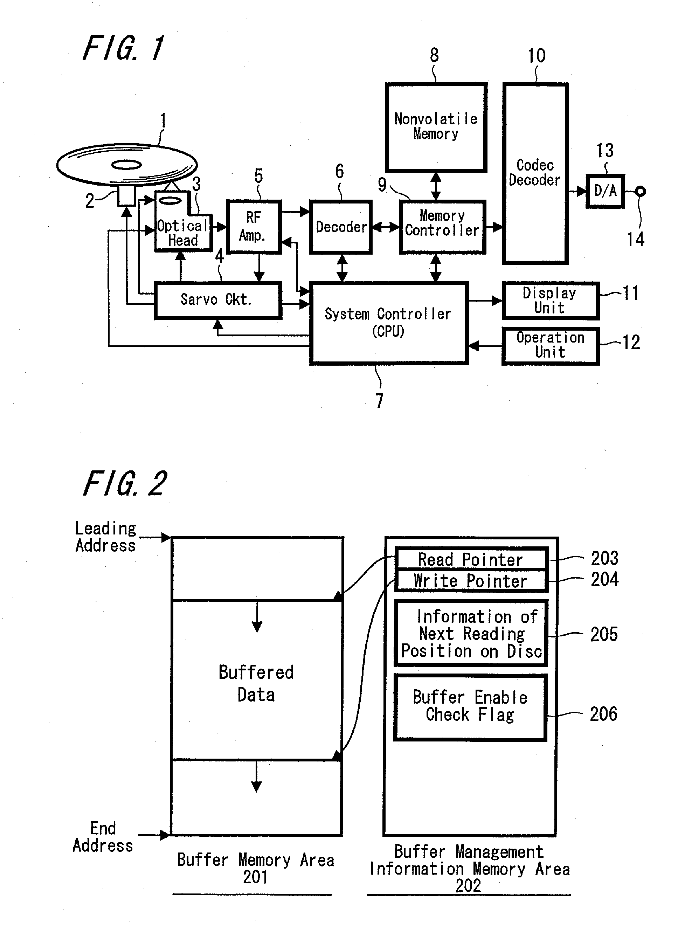

Embodiments of the present invention will be described below with reference to the drawings. FIG. 1 of the accompanying drawings is a block diagram showing an arrangement of an information reproducing apparatus according to an embodiment of the present invention. In FIG. 1, let us describe an audio reproducing apparatus using a magneto-optical disc (MD) as storage media.

In the following description, the audio reproducing apparatus is applied to the information reproducing apparatus by way of example, and the present techniques can be applied to a video reproducing apparatus, an image reproducing apparatus and other reproducing apparatus. A magneto-optical disc is applied to storage media by way of example, and the present invention can be applied to other disc reproducing apparatus for reproducing a CD (compact disc), a DVD (digital versatile disc), a HDD (hard disc drive) and other discs. Further, an MRAM (magnetic random-access memory) is applied to the buffer memory by way of example, and the present techniques can be realized by using other types of nonvolatile memories such as a flash memory, an FeRAM and a battery-backup SRAM (static random-access memory).

As shown in FIG. 1, there is provided a magneto-optical disc 1, for example, serving as storage media for storing therein information. This magneto-optical disc 1 is rotated by a spindle motor 2. An optical head 3 is provided so as to oppose to the recording surface of this magneto-optical disc 1. This optical head 3 irradiates the magneto-optical disc 1 with laser light. Then, the optical head 3 detects reflected light from the magneto-optical disc 1, and a detected signal from the optical head 3 is supplied through an RF (radio frequency) amplifier 5 to a servo circuit 4 to drive the spindle motor 2 and the optical head 3 and also to effect servo operations such as tracking servo and focusing servo on the spindle motor 2 and the optical head 3.

Upon reproducing operation, information is read out from a detected signal that has been detected from reflected light of the magneto-optical disc 1 by the optical head 3. Specifically, the detected signal that has been detected from the reflected light is supplied to the RF amplifier 5. Information supplied to the RF amplifier 5 is calculated and thereby various kinds of information are detected from the information thus supplied to the RF amplifier 5. Of the thus read out various kinds of information, a reproduced RF signal is processed by a decoder 6 in a decoding fashion such as modulation and is written in a buffer memory area of a nonvolatile memory 8 such as an MRAM under control of a memory controller 9.

There is provided an operation unit 12 into which operation input data is supplied by a user. An operation signal from this operation unit 12 is supplied to a system controller 7, and command signals for driving the spindle motor 2 and the optical head 3 and effecting control operations such as tracking servo are supplied from the system controller 7 to the servo circuit 4 in accordance with the supplied command signals so as to read desired information from the magneto-optical disc 1. The optical head 3, the RF amplifier 5,the decoder 6, the memory controller 9 and so on are driven under control of the system controller 7. Further, display signals indicative of contents of operations done by the user and the like are supplied to a display unit 11.

Data written in the buffer memory area of the nonvolatile memory 8 is transferred to a codec (coder and decoder) decoder 10. The codec decoder 10 expands transferred data and processes the expanded transferred data in a reproducing signal processing fashion to form an output digital signal. The thus formed output digital signal is transferred to a D/A (digital-to-analog) converter 13, in which it is converted from the digital signal to an analog signal and is thereby reproduced. The thus converted analog reproduced signal is delivered to an output terminal 14.

FIG. 2 shows an arrangement of the data area that is written in the nonvolatile memory 8. As shown in FIG. 2, the nonvolatile memory 8 includes a buffer memory area 201 and a buffer management information memory area 202. Further, the buffer management information memory area 202 includes a read pointer 203, a write pointer 204, information of next reading position on disc 205 and a buffer enable check flag 206.

First, information is written in the buffer memory area 201 of the nonvolatile memory 8 from the decoder 6 at speed of 14.1 Mbit/sec., for example. At that time, when data is written in the buffer memory area 201, the write pointer 204 of the buffer management information area 202 of the nonvolatile memory 8 is incremented.

Data is read out from the buffer memory area 201 to the codec decoder 10 at speed of 0.3 Mbit/sec., for example. At that time, each time data is read out from the buffer memory area 201, the read pointer 203 of the buffer management information memory area 202 of the nonvolatile memory 8 is incremented.

Accordingly, since the write speed and the read speed are different from each other, data of a certain data amount is accumulated in the buffer memory area 201 of the nonvolatile memory 8. Further, at a time in which data is fully accumulated in the buffer memory area up to the limit of its storage capacity, the optical head 3 stops reading data from the magneto-optical disc 1. However, the information reproducing apparatus continues to read data from the buffer memory area 201, and hence reproduced audio output can be prevented from being interrupted.

Thereafter, the information reproducing apparatus will continue to read data from the buffer memory area 201 of the nonvolatile memory 8. When the data accumulated amount of the buffer memory area 201 becomes less than a certain amount at a certain time, the optical head 3 resumes reading data from the magneto-optical disc 1 and also resumes writing data in the buffer memory area 201 and thereby data is accumulated in the nonvolatile memory 8.

Since the reproduced audio signal is outputted through the buffer memory area 201 of the nonvolatile memory 8, even when deviated tracking occurs due to disturbance or the like, the reproduced sounds can be prevented from being interrupted. When the optical head 3 accesses the correct tracking position to resume reading data from the buffer memory area 201 while accumulated data still remains in the buffer memory area 201 of the nonvolatile memory 8, the information reproducing apparatus is able to continue operation without influencing reproduced output. That is, according to this processing, the information reproducing apparatus can improve shock-proof function considerably.

The buffer memory area 201 of the nonvolatile memory 8 is constructed as a ring buffer, and when the write pointer 204 passes the end address, the position of next time writing operation moves to the head address. The write pointer 204 is inhibited from passing the read pointer 203. When the write pointer 204 becomes closest to the read pointer 203, data is fully accumulated in the buffer memory area 201 of the nonvolatile memory 8 up to the limit of its storage capacity. When a difference between accumulated data amounts becomes less than a data amount of data that can be written by one write operation, the information reproducing apparatus stops writing data from the disc 1 into the buffer memory area 201.

The information reproducing apparatus has the following two systems of modes to resume reproduction of data next time after it has been stopped.

① Mode to resume reproduction of data from the position at which reproduction is stopped previously or to resume reproduction of data from the position several frames ahead of the position at which reproduction has been stopped before. This mode will be referred to as a "recovery reproduction mode".

② Mode to resume reproduction of data from the starting portion of a disc or to resume reproduction of data from the starting portion of a piece of music that was being reproduced before. This mode will be referred to as a "starting portion reproduction mode".

These "recovery reproduction mode" and "starting portion reproduction mode" can be set by a user.

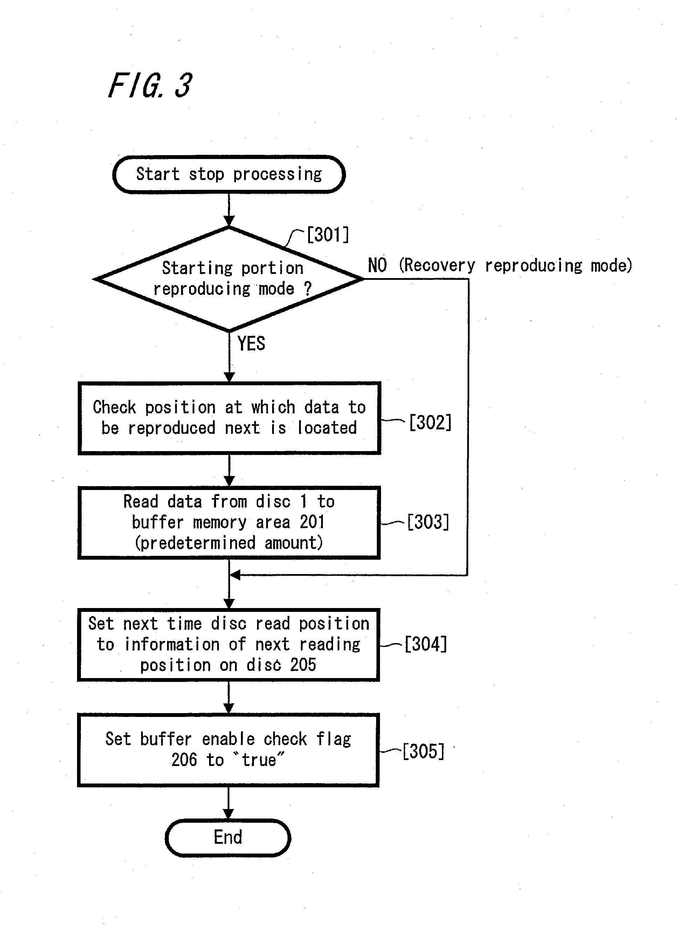

Next, operations in the above-mentioned two modes will be described with reference to flowcharts of FIGS. 3 to 5. First, the stop processing will be described with reference to FIG. 3. The stop operation is made available by user's operation. Specifically, when a user sets the information reproducing apparatus powered off during the reproduction operation, the operation unit 12 issues a stop command to the system controller 7. When receiving the stop command, the system controller 7 starts the stop processing.

Specifically, referring to FIG. 3, it is determined at a decision step [301] whether or not the next time reproducing operation after the information reproducing apparatus has been stopped is the starting portion reproducing mode. If the next time reproducing operation is the starting portion reproducing mode as represented by a YES at the decision step [301] , then control goes to a step [302], whereat the position at which data to be reproduced next time is located on the disc 1 is checked. Further, at a step [303], data of a predetermined data amount is read out from the disc 1 to the buffer memory area 201 of the nonvolatile memory 8.

At a step [304], the next reading position on disc is set to the information of next reading position on disc 205 of the buffer management information memory area 202 of the nonvolatile memory 8. At the next step [305], the buffer enable check flag of the buffer management information memory area 202 of the nonvolatile memory 8 is set to "true".

Specifically, when a user stops the information reproducing apparatus during the reproducing operation, the operation unit 12 issues the stop command to the system controller 7. When receiving the stop command from the operation unit 12, the system controller 7 immediately stops reading out data from the nonvolatile memory 8, reading out data from the optical head 3 and writing data from the decoder 6 into the nonvolatile memory 8.

Then, the system controller 7 writes the next address of data of which writing operation in the buffer memory area 201 of the nonvolatile memory 8 was finished, in the information of next reading position on disc 205 of the buffer management information memory area 202. At that time, when the recovery reproduction mode is designated as the next time reproduction operation after the writing of data in the nonvolatile memory 8 has been stopped as described above, the buffer enable check flag 206 is set to "true", the supply of power to each block is stopped and the system gets into the stop mode.

If on the other hand the starting portion reproducing mode is designated as the next time reproducing operation, logical disc data indicative of the starting music is read out from the disc 1, and data is written in the head address of the buffer memory area 201 of the nonvolatile memory 8. At that time, the write pointer 204 of the buffer management information memory area 202 of the nonvolatile memory 8 is incremented in response to writing of the start address.

This operation is continued until data of a predetermined data amount is accumulated in the buffer memory area 201 of the nonvolatile memory 8. Then, when a data amount of accumulated data reaches the predetermined data amount, reading of data from the disc 1 is stopped and writing of data from the decoder 6 to the nonvolatile memory 8 is stopped, whereafter the read pointer 203 of the buffer management information memory area 202 of the nonvolatile memory 8 is set to the head address.

Further, a next address of the data on the disc 1, whose writing in the buffer memory area 201 of the nonvolatile memory 8 has been finished, is written in the information of next reading position on disc 205 of the buffer management information memory area 202 of the nonvolatile memory 8. Also, the buffer enable check flag 206 is set to "true". Thereafter, the supply of power to each block is stopped and the system gets into the stop mode.

Next, the processing executed when the disc 1 is ejected from the information reproducing apparatus will be described below. Specifically, this processing is executed when operation such as exchange of the disc 1 is executed in the above-mentioned stop mode of the system. For example, when the disc 1 is ejected from the information reproducing apparatus or data such as ID (identifying) code that is directly read out from the disc 1 in the early stage in which playback begins is not identical to the previous data, this processing is executed.

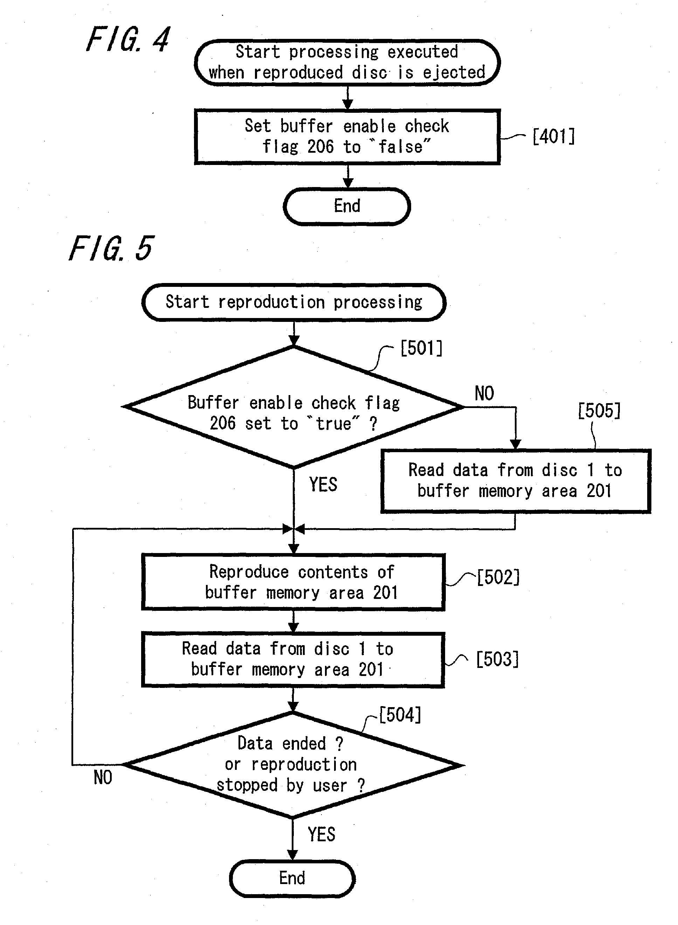

Referring to the flowchart of FIG. 4, at a step [401], the buffer enable check flag 206 of the buffer management information memory area 202 of the nonvolatile memory 8 is set to "false". Thus, when the disc 1 is exchanged by the user, the buffer enable check flag 206 of the buffer management information area 202 of the nonvolatile memory 8 is set to "false".

Further, the reproduction processing will be described with reference to a flowchart of FIG. 5. Referring to FIG. 5, and following the start of the reproduction processing, it is determined at the next decision step [501] whether or not the buffer enable check flag 206 of the buffer management information memory area 202 of the nonvolatile memory 8 is set to "true".

If the buffer enable check flag 206 is set to "true" as represented by a YES at the decision step [501], then control goes to a step [502], whereat reproduction of contents of the buffer memory area 201 of the nonvolatile memory 8 is started. Then, control goes to a step [503], wherein data is read out from the disc 1 to the buffer memory area 201 of the nonvolatile memory 8. Further, it is determined at the next decision step [504] whether or not data is finished or whether or not reproduction of data is stopped by the user. If a NO is outputted at the decision step [504], then control goes back to the step [502].

If the buffer enable check flag 206 is not set to "true" as represented by a NO at the above decision step [501], then control goes to a step [505], wherein data is read out from the disc 1 to the buffer memory area 201 of the nonvolatile memory 8. Thereafter, the steps [502] to [504] will be executed repeatedly. If a YES is outputted at the decision step [504], then control is ended.

Thus, when the user stops the information reproducing apparatus, the operation unit 12 issues a reproduction command to the system controller 7. When receiving the reproduction command from the operation unit 12, the system controller 7 reads the buffer enable check flag 206 of the buffer management information area 202 of the nonvolatile memory 8. If this buffer enable check flag 206 is "true", then data is read out from the buffer memory area 201 at its address indicated by the read pointer 203 and transferred to the codec decoder 10, whereafter the information reproducing apparatus starts reproducing sounds immediately.

The information reproducing apparatus reads data from the disc 1 based upon the information of next reading position on disc 205, and writes data in the buffer memory area 201 indicated by the write pointer 204. Further, the information reproducing apparatus reads data from the buffer memory area 201 at its address indicated by the read pointer 203 and transfers the thus read data to the codec decoder 10, whereafter the information reproducing apparatus continues to reproduce sounds.

If on the other hand the buffer enable check flag 206 is set to "false", then the information reproducing apparatus does not reproduce data from the buffer memory area 201 immediately and starts reading data from the disc 1 to the buffer memory area 201. Accordingly, when the disc 1 is exchanged by the user, in the next reproduction operation, data is not reproduced from the buffer memory area 201.

Accordingly, in this embodiment, information of a predetermined amount is stored in the buffer memory area 201 of the nonvolatile memory 8 from the position set when the information reproducing apparatus is powered off and supply of power to each block is stopped. When the information reproducing apparatus processes information next time, it starts processing latest information stored in the buffer memory after the information reproducing apparatus has been powered on. Thus, the information reproducing apparatus can resume processing information or resume reproducing information quickly without increasing power consumption.

According to the present techniques, it is possible to easily solve the problems encountered with the prior-art apparatus and method in which power consumption of the apparatus cannot be decreased when the apparatus intends to resume reproduction at high speed.

While the information of next reading position on disc and the buffer enable check flag are rewritten to "true" only when the information reproducing apparatus gets into the stop mode as described above, the present invention is not limited thereto and can be realized by means for rewriting the information of next reading position on disc and the buffer enable check flag to "true" each time data is written in the nonvolatile memory from the disc, for example. According to this arrangement, even when reproduction is interrupted due to unexpected accidents or the like, the signal reproducing apparatus can resume the next time reproduction quickly, and satisfactory countermeasure against such unexpected accidents can be made.

Specifically, the above-mentioned disc reproducing apparatus is able to resume reproducing the disc next time without accessing the disc after it has stopped reproducing the disc, and hence the disc reproducing apparatus can resume reproduction quickly. Also, the disc reproducing apparatus can start reproducing the optical disc more quickly both in the recovery reproduction mode and the starting portion reproduction mode. Further, when the nonvolatile memory is composed of a suitable memory, which consumes no electric power to save the contents of the memory, such as an MRAM (magnetic random-access memory), the disc reproducing apparatus consumes lesser electric power when it gets into the stop mode, and the disc reproducing apparatus can resume reproducing the optical disc quickly in the next time reproduction.

When the nonvolatile memory is composed of a suitable memory, which consumes a slight amount of electric power to save the contents of the memory, such as a battery-backup memory, the disc reproducing apparatus consumes lesser electric power when it gets into the stop mode, and the disc reproducing apparatus can resume reproducing the optical disc quickly in the next time reproduction. Further, this disc reproducing apparatus is excellent in affinity with the conventional disc reproducing apparatus that uses a buffer memory in order to protect the disc reproducing apparatus from being shocked.

MD, CD, DVD and HDD which are applied to the present invention and bit rates of main formats thereof are indicated as follows. Respective bit rates are approximate values in the form of bit/sec and the unit M is an approximate value which can be interpreted as either 1,000,000 or 1,048,576. Further, disc read speed changes depending upon whether or not the disc reproducing apparatus has a disc controller mounted. Therefore, the disc read speeds are not limited to the following ones and may be indicated for reference.
* MD:
   Disc read speed: 14.1 Mbit/sec
   ATRAC: 0.3 Mbit/sec
* CD:
   Disc read speed:
   Audio: 1.4 Mbit/sec (one time as high as the normal speed and generally ranges from approximately several times to several 10s of times as high as the normal speed)
   Data: 1.2 Mbit/sec (one time as high as the normal speed and generally ranges from approximately several times to several 10s of times as high as the normal speed)
   Audio: 1.4 Mbit/sec (PCM, 44.1 kHz, 16 bits, stereo)
* DVD:
   Disc read speed: 10.8 Mbit/sec (one time as high as the normal speed and generally ranges from approximately 8 times as high as the normal speed)
   Video: 4-8 Mbit/sec
   Audio: 192-384 kbit/sec
* HDD:
   Disc read speed: approximately several 10s of to several 100s of Mbit/sec
   Video:
      DV: 28 Mbit/sec
      MPEG1: 1-3 Mbit/sec (variable)
      MPEG2: 2-12 Mbit/sec (variable)
      Audio:
         PCM: variable (1.4 Mbit/sec in CD quality)
         MP3: 8-320 kbit/sec (variable, generally 128 kbit/sec)
         ATRAC3: 66-132 kbit/sec (variable)

On the other hand, according to the table 1, page 91 of the above-mentioned non-patent reference 1, a random-access frequency of an MRAM, for example, falls within a range of from 75 MHz to 125 MHz and can cope with recording of read-out data in most of uses of the above-mentioned discs.

According to the present embodiments, there is provided an information processing apparatus including a buffer memory between a means for reading out information from a recording medium and an information processing means, the buffer memory being composed of a nonvolatile memory. During the information processing apparatus is active, the buffer memory stores part of or whole of information read out from the recording medium. When the information processing apparatus gets into the stop mode, supply of electric power to the buffer memory is stopped while the buffer memory retains a predetermined amount of information to be processed next time. When the information processing apparatus resumes processing information, it starts processing a predetermined amount of information to be processed next time stored in the buffer memory. Therefore, this information processing apparatus can resume processing information quickly without increasing power consumption.

Further, according to the present embodiments, there is provided an information processing method including a buffer memory between a means for reading out information from the recording medium and an information processing means, the buffer memory being composed of a nonvolatile memory. During the information processing apparatus is active, the buffer memory stores part of or whole of information read out from the recording medium. When the information processing apparatus gets into the stop mode, supply of electric power to the buffer memory is stopped while the buffer memory retains a predetermined amount of information to be processed next time. When the information processing apparatus resumes processing information, it starts processing a predetermined amount of information to be processed next time stored in the buffer memory. Therefore, this information processing method can resume processing information quickly without increasing power consumption.

The present techniques can be applied to a video reproducing apparatus, an image reproducing apparatus and other reproducing apparatus. While the present invention uses the magneto-optical disc as the recording medium by way of example, the present invention is not limited thereto and can be applied to other disc reproducing apparatus for reproducing a CD, a DVD and a HDD (hard disc drive). Furthermore, while the present invention uses the MRAM as the buffer memory, the present invention is not limited thereto and can be realized by using other types of nonvolatile memories such as a flash memory, an FeRAM and a battery-backup SRAM.

According to the information processing apparatus of the present embodiments, since information of a predetermined amount from the position set in the stop mode is stored in a buffer memory of a nonvolatile memory from the position set when the information processing apparatus gets into the stop mode and supply of power is brought to an end. When the information processing apparatus resumes processing information next time, it starts processing latest information stored in the buffer memory after the information processing apparatus has been powered on. Thus, the information processing apparatus can resume processing information more quickly without increasing power consumption.

According to the information processing apparatus of the present embodiments, since the information processing apparatus has a recovery processing mode and a starting portion processing mode and the two processing modes can be set by a user, the information processing apparatus can resume processing information in a desired manner set by a user.

According to the information processing apparatus of the present embodiments, when the information processing apparatus gets into the recovery processing mode, since information of a predetermined amount to be processed next time is continued to the latest information that has been processed before the information processing apparatus is powered off, the information processing apparatus can resume processing information more quickly in the recovery processing mode.

According to the information processing apparatus of the present embodiments, when the information processing apparatus gets into the starting portion processing mode, since information of a predetermined amount to be processed next time is information recorded at an arbitrary position of a recording medium, the information processing apparatus can resume processing information more quickly in the starting portion processing mode.

According to the information processing apparatus of the present embodiments, if a recording medium is exchanged during the information processing apparatus gets into the stop mode, then when the information processing apparatus resumes processing information, since the information processing apparatus is inhibited from starting processing the predetermined amount of information to be processed next time stored in the buffer memory, the information processing apparatus can be prevented from reproducing erroneous information.

According to the information processing apparatus of the present embodiments, since the nonvolatile memory is composed of a high-speed nonvolatile memory which does not consume electric power in the standby mode, the information processing apparatus can process information satisfactorily.

According to the information processing apparatus of the present embodiments, since the nonvolatile memory is a magnetic random-access memory, the present invention can be realized

According to the information processing method of the present embodiments, since information of a predetermined amount from the position set in the stop mode is stored in a buffer memory of a nonvolatile memory from the position set when the information processing apparatus gets into the stop mode and supply of power is brought to an end. When the information processing apparatus resumes processing information next time, it starts processing latest information stored in the buffer memory after the information processing apparatus has been powered on. Thus, the information processing apparatus can resume processing information more quickly without increasing power consumption.

According to the information processing method of the present embodiments, since the information processing apparatus has a recovery processing mode and a starting portion processing mode and the two processing modes can be set by a user, the information processing apparatus can resume processing information in a desired manner set by a user.

According to the information processing method of the present embodiments, when the information processing apparatus gets into the recovery processing mode, since information of a predetermined amount to be processed next time is continued to the latest information that has been processed before the information processing apparatus is powered off, the information processing apparatus can resume processing information more quickly in the recovery processing mode.

According to the information processing method of the present embodiments, when the information processing apparatus gets into the starting portion processing mode, since information of a predetermined amount to be processed next time is information recorded at an arbitrary position of a recording medium, the information processing apparatus can resume processing information more quickly in the starting portion processing mode.

According to the information processing method of the present embodiments, if a recording medium is exchanged during the information processing apparatus gets into the stop mode, then when the information processing apparatus resumes processing information, since the information processing apparatus is inhibited from starting processing the predetermined amount of information to be processed next time stored in the buffer memory, the information processing apparatus can be prevented from reproducing erroneous information.

According to the information processing method of the present embodiments, since the nonvolatile memory is composed of a high-speed nonvolatile memory which does not consume electric power in the standby mode, the information processing apparatus can process information satisfactorily.

According to the information processing method of the present embodiments, since the nonvolatile memory is a magnetic random-access memory, the present invention can be realized.

Having described a preferred embodiment of the invention with reference to the accompanying drawings, it is to be understood that the invention is not limited to that precise embodiment and that various changes and modifications could be effected therein by one skilled in the art without departing from the scope of the invention as defined in the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus for reproducing a disc-shaped recording medium comprising:
a buffer memory located between means for reading out information from said recording medium and information processing means, wherein said buffer memory is a nonvolatile memory that can operate at high speed and which consumes no electric power in the standby mode, said buffer memory stores part of or whole of information read out from said disc-shaped recording medium during said information processing apparatus is active, power supply to said buffer memory is stopped while said buffer memory stores information of a predetermined amount to be processed next when said information processing apparatus is stopped and said information processing apparatus starts processing said information of the predetermined amount to be processed next which said buffer memory stored when said information processing apparatus resumes operation.

2. An information processing apparatus according to claim 1, wherein said nonvolatile memory is a magnetic random-access memory.

3. An information processing apparatus according to claim 1, wherein said information processing apparatus includes a recovery processing mode and a starting portion processing mode and said two processing modes can be set by users.

4. An information processing apparatus according to claim 3, wherein said information of the predetermined amount to be processed next continues latest information processed before said information processing apparatus is powered off when said information processing apparatus is set to said recovery processing mode.

5. An information processing apparatus according to claim 3, wherein said information of the predetermined amount to be processed next is information recorded at an arbitrary position on said disc-shaped recording medium when said information processing apparatus is set to said starting portion processing mode.

6. An information processing apparatus according to claim 1, wherein said information processing apparatus is inhibited from processing said information of the predetermined amount to be processed next when said information processing apparatus resumes operation if said disc-shaped recording medium is exchanged during said information processing apparatus is powered off.

7. An information processing method for reproducing a disc-shaped recording medium comprising the step of:
providing a buffer memory between means for reading out information from said recording medium and information processing means, wherein said buffer memory is a nonvolatile memory that can operate at high speed and which consumes no electric power in the standby mode, said buffer memory stores part of or whole of information read out from said disc-shaped recording medium during said information processing apparatus is active, power supply to said buffer memory is stopped while said buffer memory stores information of a predetermined amount to be processed next when said information processing apparatus is powered off and said information processing apparatus starts processing said information of the predetermined amount to be processed next which said buffer memory stored when said information processing apparatus resumes operation.

8. An information processing method according to claim 7, wherein said nonvolatile memory is a magnetic random-access memory.

9. An information processing method according to claim 7, wherein said information processing apparatus includes a recovery processing mode and a starting portion processing mode and said two processing modes can be set by users.

10. An information processing method according to claim 9, wherein said information of the predetermined amount to be processed next continues latest information processed before said information processing apparatus is powered off when said information processing apparatus is set to said recovery processing mode.

11. An information processing method according to claim 9, wherein said information of the predetermined amount to be processed next is information recorded at an arbitrary position on said disc-shaped recording medium when said information processing apparatus is set to said starting portion processing mode.

12. An information processing method according to claim 7, wherein said information processing apparatus is inhibited from processing said information of the predetermined amount to be processed next when said information processing apparatus resumes operation if said disc-shaped recording medium is exchanged during said information processing apparatus is powered on.
